# EUROPEAN PATENT APPLICATION

(11) **EP 1 106 992 A1**
(43) Date of publication of application: **13.06.2001**
(21) Application number: 99309668.4
(22) Date of filing: 01.12.1999
(51) Int. Cl.: G01N 21/88

(54) **Tape to detect surface blemishes**

(71) Applicant: BRITISH AEROSPACE PUBLIC LIMITED COMPANY, Farnborough, Hampshire GU14 6YU (GB)
(72) Inventor: The designation of the inventor has not yet been filed
(74) Representative: Edis, Ronald Malcolm

(57) **Abstract**

The present invention relates to a method for detecting imperfections on a surface such as an aircraft skin surface, the method comprising applying a tape material to the surface, the tape material having a generally reflective surface such as to visually highlight imperfections on the skin when the tape is applied against the surface, and viewing the taped surface for any such imperfections.

## Description

The present invention relates to a tape, and in particular, a tape used to detect surface blemishes on a skin of an aircraft assembly.

It is critically important to detect any imperfections in the surface of an airframe skin of an aircraft. Presently, the detection of such imperfections and blemishes is carried out by applying paint to the airframe surface. The paint is of a non-hardening type so that it can be easily removed once blemish testing has been completed. The painting process necessitates the moving of the airframe assembly to a painting area which can take up to two to three days.

The building of an aircraft, to a customer's specification, is carried out in a pre-set time period known as a build cycle. The painting process is not usually carried out until an airframe assembly, consisting of, for example, the nose assembly, has been assembled into the final aircraft structure. If imperfections within the airframe skin are then suspected, there is not sufficient time in the build cycle to move the aircraft to the painting area, repair the blemish and spray the repaired area, and return it ready for collection by the customer. In cases where the aircraft is late for collection, extensive delivery penalties may be incurred. Even, if inspection and painting are carried out before the end of the build cycle, for example when a relatively minor panel assembly is tested, the process of painting and testing is extremely disruptive to the overall manufacturing process. Furthermore, testing of various airframe assemblies can only be carried out at set periods during the build cycle, which can lead to substantial delays to other parts of the manufacture.

The present invention seeks to alleviate the aforementioned disadvantage of using paint as a detector of skin imperfections by providing a reflective tape which can be placed over a surface of the airframe assembly in order to highlight the occurrence of any imperfections in that surface.

Accordingly, there is provided a method for detecting imperfections in a skin surface such as an aircraft skin surface, the method comprising applying a tape material to the surface, the tape material having a generally reflective surface such as to visually highlight imperfections on the skin when the tape is applied against the surface, and viewing the taped surface for any such imperfections.

Preferably a light source is provided with which to view any surface imperfections more easily.

Preferably the tape being applied is able to conform to a double curvature surface and, preferably has a sufficient degree of tack to allow the tape to be remove from, and re-applied to, the skin surface.

The method will now be described, by way of example.

In accordance with the present invention, the method of detection of imperfections on a surface of an aircraft assembly involves placing a tape material against the surface. The tape must be of sufficiently shiny or reflective texture so that, when the tape is placed against the matt surface of an airframe assembly, the imperfections are highlighted in such a way that they become readily visible, particularly when the surface is viewed against a light source.

A series of tests have been conducted in order to establish the characteristics that the tape should have in order to provide the optimum efficiency of detection of imperfections and blemishes. It has been found that the a premium grade self-adhesive polyolefin film, such as "tesa 50530", has excellent characteristics. Such a film has been known for use predominantly to provide temporary protection to freshly painted surfaces, and is known throughout the automotive industry as a way of providing protection to body panels. No self-adhesive film, such as tesa 50530, has been used for detection of blemishes or imperfections in surfaces.

The optimum characteristics have been found to be the following, from tests conducted on tesa 50530 :

| | |
|---|---|
| Backing/Tape material | Polyolefin Film |
| Adhesive | Synthetic elastomer |
| Total thickness | 80 µm |
| Elongation at break | > 450% |
| Tensile strength | > 20 N/mm² |
| Adhesion | 1 N/cm |
| Outdoor resistance | > 400 h |

The tape is preferably coloured white to highlight blemishes more effectively.

It is appreciated that the aforementioned properties of the tape material have been found empirically to provide the optimum highlighting of any skin imperfections, and that one or more of the properties may be altered to provide a degree of highlighting, albeit with less efficiency.

The adhesive, formed as a layer on the back face of the tape, is strong enough for the tape to lie flat against the airframe assembly surface, but is sufficiently weak, having a degree of "tack", to enable the tape to be easily repositioned over the area of the surface to be tested. This also enables the tape to be used repeatedly on different areas of the surface.

Alternatively, a metallic tape can be used to detect skin imperfections on the surface of an airframe assembly. The mirror finish of such a tape provides a more pronounced highlight of any such blemishes, and so would be used in more specific, uneven areas containing, for example rows of rivets. The increased cost of the metallic tape, however, would tend to prevent the tape from being used over wider areas, to which the white tape would be more preferable. Additionally, the polyolefin film has the ability more easily to adopt the surface contour of a double curvature surface than does the metallic tape.

## Claims

1. A method for detecting imperfections on a skin surface, the method comprising applying a tape material to the surface, the tape material having a generally reflective surface such as to visually highlight imperfections on the skin when the tape is applied against the surface, and viewing the taped surface for any such imperfections.

2. A method according to claim 1, further comprising the step of providing a light source with which to view the surface imperfections.

3. A method according to claim 1 or 2, wherein the tape being applied is able to conform to a double curvature surface.

4. A method according to claim 1, 2 or 3, wherein the tape being applied has a sufficient degree of tack to allow it to be removable from, and re-applied to the aircraft skin.
